Europäisches Patentamt

European Patent Office

Office européen des brevets

(11) Veröffentlichungsnummer: **0 040 880**
**B1**

(12) **EUROPÄISCHE PATENTSCHRIFT**

(45) Veröffentlichungstag der Patentschrift:
15.02.84

(21) Anmeldenummer: 81200533.8

(22) Anmeldetag: 19.05.81

(51) Int. Cl.³: **G 11 B 17/02,** G 11 B 3/60,
**G 11 B 1/00**

(54) **Abspielgerät für mit Informationen versehene Platten.**

(30) Priorität: **24.05.80 DE 3019928**

(43) Veröffentlichungstag der Anmeldung:
**02.12.81 Patentblatt 81/48**

(45) Bekanntmachung des Hinweises auf die Patenterteilung:
**15.02.84 Patentblatt 84/7**

(84) Benannte Vertragsstaaten:
**AT CH DE FR GB IT LI NL SE**

(56) Entgegenhaltungen:
**EP - A - 0 026 152**
**DE - A - 2 340 143**
**DE - A - 2 709 043**
**DE - A - 2 711 969**
**FR - A - 2 353 924**
**US - A - 1 832 797**

**Patents Abstracts of Japan, Band 3, Nr. 28, 9 März 1979,
Seite 50E96**
**Funkschau 1980, Heft 16, Franzis-Verlag-GmbH,
München, Seiten 81 und 82**

(73) Patentinhaber: **Philips Patentverwaltung GmbH,
Billstrasse 80, D-2000 Hamburg 28 (DE)**
(84) Benannte Vertragsstaaten: **DE**

(73) Patentinhaber: **N.V. Philips' Gloeilampenfabrieken,
Groenewoudseweg 1, NL-5621 BA Eindhoven (NL)**
(84) Benannte Vertragsstaaten: **CH FR GB IT LI NL SE AT**

(72) Erfinder: **Eisemann, Kurt, Moltkestrasse 36,
D-1000 Berlin 45 (DE)**

(74) Vertreter: **Kupfermann, Fritz-Joachim et al, Philips
Patentverwaltung GmbH
Billstrasse 80 Postfach 10 51 49,
D-2000 Hamburg 28 (DE)**

Abspielgerät für mit Informationen versehene Platten

Die Erfindung bezieht sich auf ein Abspielgerät für mit Informationen versehene Platten und mit:

— einem Gehäuse mit einer an einer Gehäusevorderseite vorgesehenen Einfuhröffnung für solche Platten,

— einem in dem Gehäuse angeordneten Laufwerk zum drehenden Antreiben der Platten um eine Drehachse,

— einer Verfahr- und Hebevorrichtung für das horizontale Verfahren und gleichzeitige vertikale In-Verbindung-Bringen des Plattentellers aus einer wenigstens teilweise aus dem Gehäuse ausgefahrenen Stellung (Ladestellung für die Platte) in die Betriebsstellung, in welcher der Plattenteller ganz in das Gehäuse eingefahren und in Verbindung gebracht ist mit dem im Gehäuse angeordneten Laufwerk zum drehenden Antreiben des Plattentellers um eine Drehachse.

Aus der US-A Nr. 2094246 ist es bekannt, einen Plattenspieler als Einheit in einer Schublade zu montieren, die aus einem Schrank oder Gehäuse herausziehbar ist. Dies hat aber verschiedene Nachteile. Zunächst muss die Schubladenführung sehr stabil ausgeführt sein, da sie bei ausgefahrener Schublade das ganze, vor dem Gehäuse befindliche Gerät abstützen muss. Ein weiterer Nachteil ist die Frontlastigkeit des Gehäuses bei ausgefahrenem Plattenspiele. Schliesslich hat das Ausführen des ganzen Plattenspielers auch technische Nachteile, wenn der Plattenspieler nach dem In-Gang-Setzen mit umlaufender Platte in das Gerät eingeschoben wird. Wegen der federnden Aufhängung ergeben sich Schwingungen aufgrund der Beschleunigung und des Abbremsens beim Einschiebvorgang, die sehr leicht zu einer Verstellung des Tonarmes bzw. einem Herausgleiten der Nadel aus der Rille führen.

Aus der JP-A Nr. 5349815 ist es darüber hinaus bekannt, eine Schallplatte durch einen horizontalen Gehäuseschlitz in das Gehäuse einzuführen. Innerhalb des Gehäuses wird die Platte von einem Greifmechanismus ergriffen und gegenüber dem Gehäuse und dem Plattenteller in seine Abspielposition gebracht. Daraufhin fährt der Plattenteller hoch und übernimmt die Platte von der Greifvorrichtung.

Schliesslich ist auch eine Pressemeldung (Pressemitteilung IV/80 V. 15.4.1980 der Firma Aiwa, Verkaufs- und Service GmbH, Vogelsangerstr. 165, D-5000 Köln 30) über einen Frontlader-Plattenspieler vom Typ AP-D 50 bekannt. Nach dieser Pressemeldung ist bei diesem Plattenspieler eine Plattenauflage über ein Zahngetriebe ein- und ausfahrbar sowie absenkbar. Mit einer Zahnung an der Unterseite des Plattentellers kommt ein Getriebezahnrad, welches den Plattenteller ein- und ausfährt. Die Zahnung an dem Plattenteller ist an der Plattentellervorderseite zur Telleroberfläche hin hochgezogen. Wenn der Plattenteller eingefahren wird und die hochgezogene Zahnung auf das Getriebezahnrad aufläuft, senkt sich der Plattenteller ab.

Es ist Aufgabe der Erfindung, ein Abspielgerät der eingangs erwähnten Art zu schaffen, das beim Ein- und Ausfahren sowie bei der Handhabung innerhalb des Abspielgerätes eine schonendere Plattenbehandlung gestattet.

Die gestellte Aufgabe ist bei einem Abspielgerät der eingangs erwähnten Art erfindungsgemäss dadurch gelöst; dass

— das horizontale Verfahren des Plattentellers in eine Zwischenstellung nur mit Hilfe der Verfahrvorrichtung und das anschliessende vertikale Anheben des Plattentellers aus der Zwischenstellung in die Betriebsstellung nur mit Hilfe der Hebevorrichtung erfolgt, wobei beide Vorrichtungen unabhängig und zeitlich nacheinander betätigt werden, und

— eine Ablage vorgesehen ist, welche den Plattenteller beim horizontalen Verfahren unterstützt, und aus welcher der Plattenteller mit Hilfe der Hebevorrichtung abhebbar ist.

Da der gesamte Abspielmechanismus innerhalb des Gehäuses verbleibt, kann die Verfahrvorrichtung leicht aufgebaut sein. Hinzu kommt noch, dass eine spezielle Greif- und Zentriervorrichtung entfällt. Die Platte bleibt von ihrem Von-Hand-Auflegen auf den Plattenteller bis zum Von-Hand-Abnehmen auf dem Plattenteller liegen.

Eine Ausgestaltung der Erfindung ist dadurch gekennzeichnet, dass

— das Laufwerk eine um die Drehachse drehbare Mitnahmevorrichtung umfasst,

— die Mitnahmevorrichtung von der Hebevorrichtung axial verschiebbar ist von einer unterhalb der abgesenkten Stellung des Plattentellers befindlichen Ausgangsstellung über eine Zwischenstellung, in der die Mitnahmevorrichtung mit dem Plattenteller in einen Wirkeingriff zur Mitnahme des Plattentellers gebracht wird, in eine mit der Betriebsstellung des Plattentellers übereinstimmende Antriebsstellung und zurück.

Das In-Spielfunktion-Bringen des Plattenspielers mit einer aufgelegten Platte erfolgt damit einzig und allein durch das Heben und Senken der Mitnahmevorrichtung.

Nach einer weiteren Ausgestaltung der Erfindung besteht die Mitnahmevorrichtung aus einem Antriebsteller. Mitnahmeteller und Plattenteller bilden in der Betriebsstellung gemeinsam den herkömmlichen, einstückigen Plattenteller. Um das Zusammenwirken von Mitnahmeteller und Plattenteller neuer Bauart sicherzustellen, sind der Antriebsteller und der Plattenteller mit miteinander zusammenwirkenden Zentriergliedern versehen, die bei vorhandenem Wirkeingriff den Plattenteller gegenüber der Drehachse zentrieren. Nach dem Anheben des Plattentellers durch den Mitnahmeteller sind dann beide drehschlüssig miteinander verbunden.

Nach einer weiteren Ausgestaltung der Erfindung besteht die Verfahrvorrichtung aus einem Schlitten, an dem die Ablage angeordnet ist und worauf der Plattenteller bei abgesenkter Stellung der Mitnahmevorrichtung lose aufliegt. Der Schlitten ist dabei aus mehreren Teilschlitten aufgebaut. Dies ergibt einen teleskopartig ausfahrbaren Aufbau mit einer Einzelschlittenlänge, die bei beispielsweise zweiteiligem Aufbau nicht länger ist als der Durchmesser einer 30-cm-Schallplatte.

Nach einer weiteren Ausgestaltung der Erfindung ist der Funktionsaufbau des Abspielgerätes derart gewählt, dass
— der Plattenteller mit einem Zentrierstift für aufzulegende Platten versehen ist,
— eine Welle zum Tragen der Mitnahmevorrichtung vorgesehen ist,
— die Welle in einer Lagerbuchse mit einem geschlossenen Buchsenboden gelagert ist, auf dem sich die Welle axial abstützt,
— die Lagerbuchse mittels der Hebevorrichtung axial verschiebbar ist für das Bewegen der Mitnahmevorrichtung zwischen der Ausgangsstellung und der Betriebsstellung,
— eine Verdrehsicherung vorgesehen ist, die die Lagerbuchse gegen ein Verdrehen gegenüber dem Gehäuse sichert.

Zum Anheben und Absenken der Mitnahmevorrichtung und des Plattentellers und damit zum In-Betrieb- und In-Ausgangsstellung-Bringen des Plattentellers wird nur das Anheben und Absenken der Lagerbuchse vollzogen, was mit einer technisch einfachen Hebe- und Senkvorrichtung verwirklicht ist.

Eine weitere Ausgestaltung der Erfindung ist dadurch gekennzeichnet, dass
— in der Ablage wenigstens ein Signalschalter vorgesehen ist,
— der Signalschalter an ein Schaltwerk signalisiert, ob auf dem Plattenteller eine Platte aufliegt oder nicht.

Der Signalschalter ist dabei mit einem Schaltstift versehen, der von einer aufgelegten Platte niederdrückbar ist.

Schliesslich steht nach einer weiteren Ausgestaltung der Erfindung das Schaltwerk mit einer logischen Schaltung in Verbindung, die den Schlitten mit der Ablage ausgefahren stehen lässt, wenn die Platte nicht abgenommen wird, und die dafür sorgt, dass der Schlitten selbsttätig einfährt, und zwar nach 25 s, wenn die Platte abgenommen wurde, oder nach 5 s, wenn die Platte ausgewechselt wurde.

Das Abspielgerät ist sowohl für nadelabgetastete als auch für licht- oder kapazitiv abgetastete Platten geeignet. Am besten eignet sich dieser Aufbau für eine Verwendung in Türmen, geschlossenen Regalen etc., da nur die Vorderseite für die Bestückung und Bedienung benötigt wird.

Die Erfindung wird anhand des in der Zeichnung dargestellten Ausführungsbeispieles näher erläutert. Es zeigen:

Fig. 1 das Abspielgerät in der Ruhe- oder Abspielstellung,

Fig. 2 das Abspielgerät nach Fig. 1 in der Ladestellung bei ausgefahrenem Schlitten,

Fig. 3 eine Seitenansicht des Abspielgerätes mit ausgefahrenem Schlitten bei weggelassener Seitenwand,

Fig. 4 eine Seitenansicht des Abspielgerätes bei eingefahrenem Schlitten und weggelassener Seitenwand,

Fig. 5 eine Seitenansicht des Abspielgerätes bei eingefahrenem Schlitten und angehobenem Antriebsteller in der Abspielstellung,

Fig. 6 die ausgefahrene Ablage des Abspielgerätes mit Signalschaltern für eine Funktionssteuerung,

Fig. 7 ein Funktionsblockschaltbild für die Signalschalter.

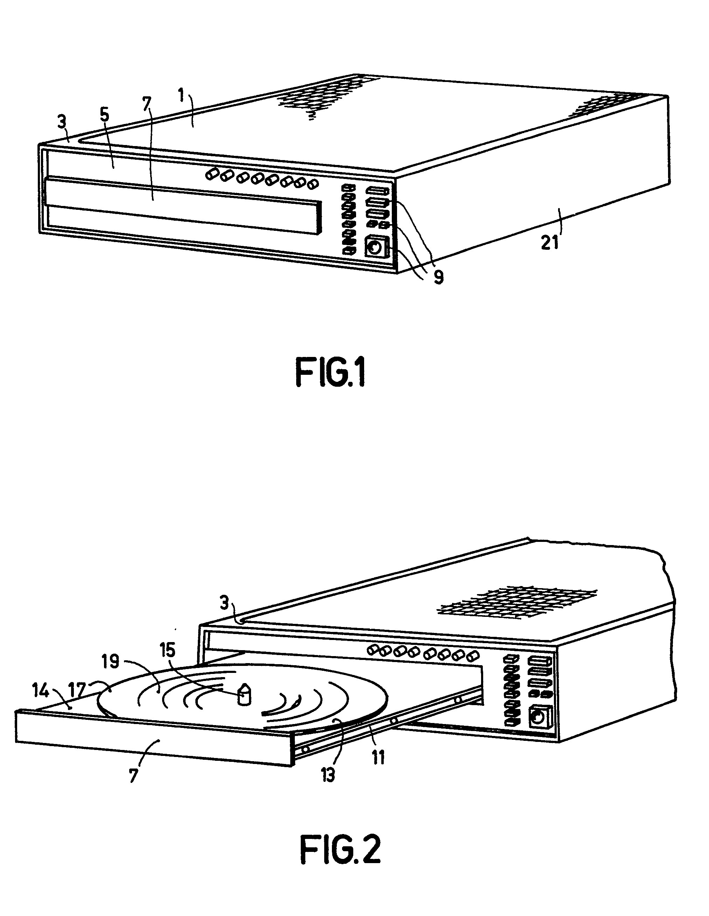

Fig. 1 zeigt das Abspielgerät nach der Erfindung in der Ruhe- oder Abspielstellung. In dieser Stellung ist das Gehäuse 3 völlig geschlossen. An seiner Vorderseite 5 ist nur eine Ladeklappe 7 zu erkennen neben diversen Stelltasten 9, beispielsweise für eine Selektoranzeige sowie Nah- und Fernbedienung.

In der Darstellung nach Fig. 2 ist aus dem Gehäuse 3 ein als Verfahrvorrichtung ausgebildeter Schlitten 11 ausgefahren, der die Ladeklappe 7 vor sich herschiebt. Der Schlitten 11 fährt mit einer von ihm getragenen Ablage 14 so weit aus, dass der auf einer Ablage 14 ruhende Plattenteller 13 frei zugänglich ist. Zu dem Plattenteller 13 gehört auch ein Zentrierstift 15, der zum Zentrieren einer aufgelegten Platte dient, auf der Informationen angebracht sind, die mit Hilfe von Nadeln, mit Lichtstrahlen oder kapazitiv abtastbar sind. Der Plattenteller 13 wird in der ausgefahrenen Stellung nach Fig. 2 im wesentlichen nur an seinem Rand 17 von der Ablage 14 getragen. Seine Mitte 19 hängt frei über einem grossen Durchbruch 20.

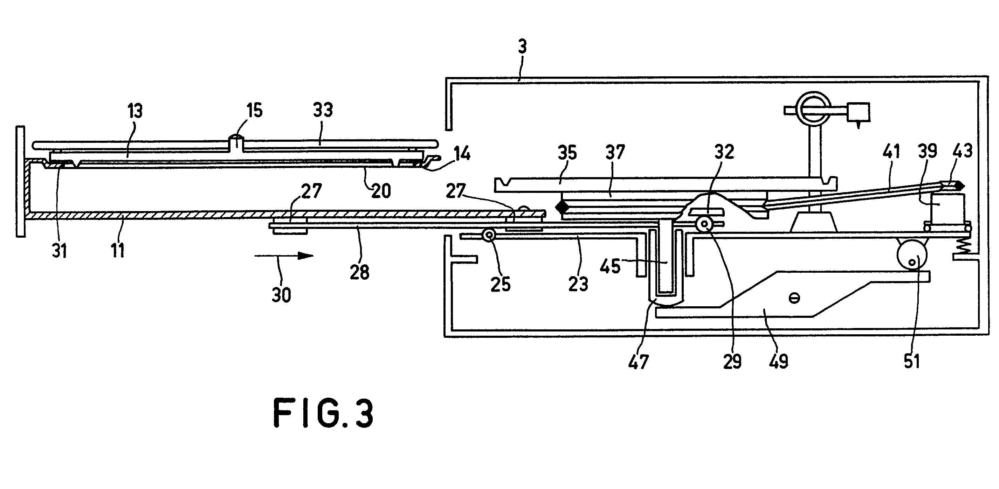

In Fig. 3 ist die schaubildliche Darstellung nach Fig. 2 in Seitenansicht wiedergegeben, wobei die Seitenwand 21 abgenommen ist. Die Ablage 14 ist dabei mit dem Schlitten 11 einstückig ausgebildet und der Schlitten 11 auf der Chassisplatte 23 verrollbar. Die Chassisplatte 23 ist zu diesem Zweck mit Laufrollen 25 und der Schlitten 11 mit Laufrollen 27 versehen. Zwischen der Chassisplatte 23 und dem Schlitten 11 befindet sich noch ein Zwischenschlitten 28 mit Laufrollen 29, die gegen ein Abkippen nach oben mittels einer Schiene 32 gesichert sind. Mit diesem Aufbau ist ein teleskopartiges Ausfahren des zweiteiligen Schlittens 11, 28 möglich. Der zweiteilige Schlitten ist, wie sich aus Fig. 3 ergibt, in Richtung des Pfeiles 30 in das Gehäuse 3 einfahrbar.

Auf dem Rand 31 der Ablage 14 wird der Plattenteller mit dem Zentrierstift 15 getragen. Auf dem Plattenteller liegt eine Informationen enthaltende Platte 33 auf.

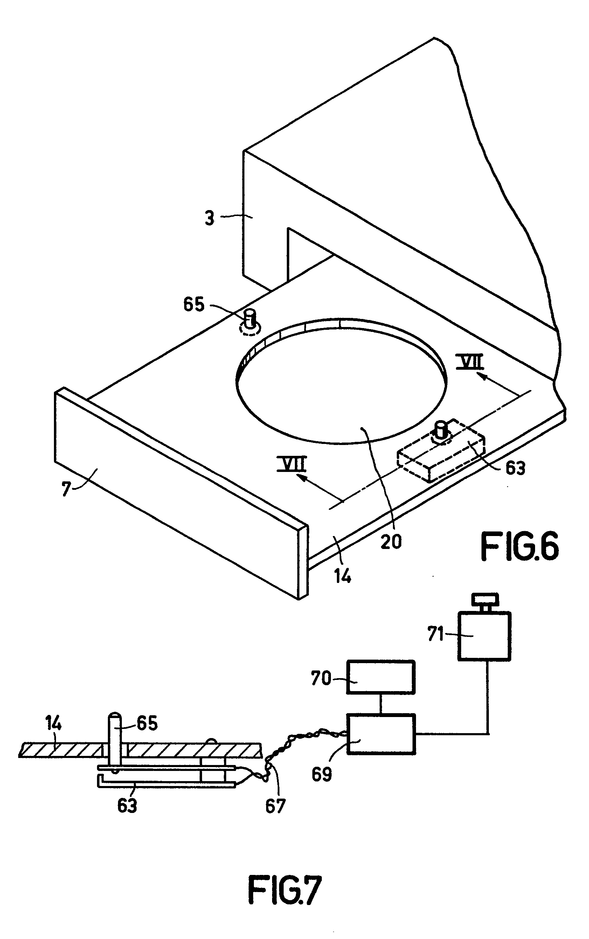

Innerhalb des Gehäuses 3 befindet sich ein zu einer Mitnahmevorrichtung gehörender Antriebsteller, der mit einer Seilrolle 37 fest verbunden ist. Der Antrieb erfolgt von einem Laufwerksmotor 39 über einen Seiltrieb 41. In der Stellung nach Fig. 3 ist der Seiltrieb 41 etwas verkantet, was keine Bedeutung hat, da der Plattenteller in der Stellung nach Fig. 3 stillsteht. Die Drehbewegung wird

3

über den Seiltrieb 41 erst dann auf den Antriebsplattenteller 35 übertragen, wenn dieser angehoben ist. In der angehobenen Stellung liegen die Seilrolle 37 und die Antriebsrolle 43 auf gleicher Höhe (Fig. 5).

Der Antriebsteller ruht über eine Welle 45 in einer Lagerbuchse 47 und stützt sich dabei auf dem Buchsenboden 48 ab. Die Lagerbuchse 47 ist mittels eines Hebels 49 anhebbar. Zum Anheben dient beispielsweise ein Exzenter 51, der auf den doppelarmigen Hebel 49 einwirken kann. Es ist aber ebensogut möglich, das Heben und Senken mit einer Steuerscheibe zu vollziehen.

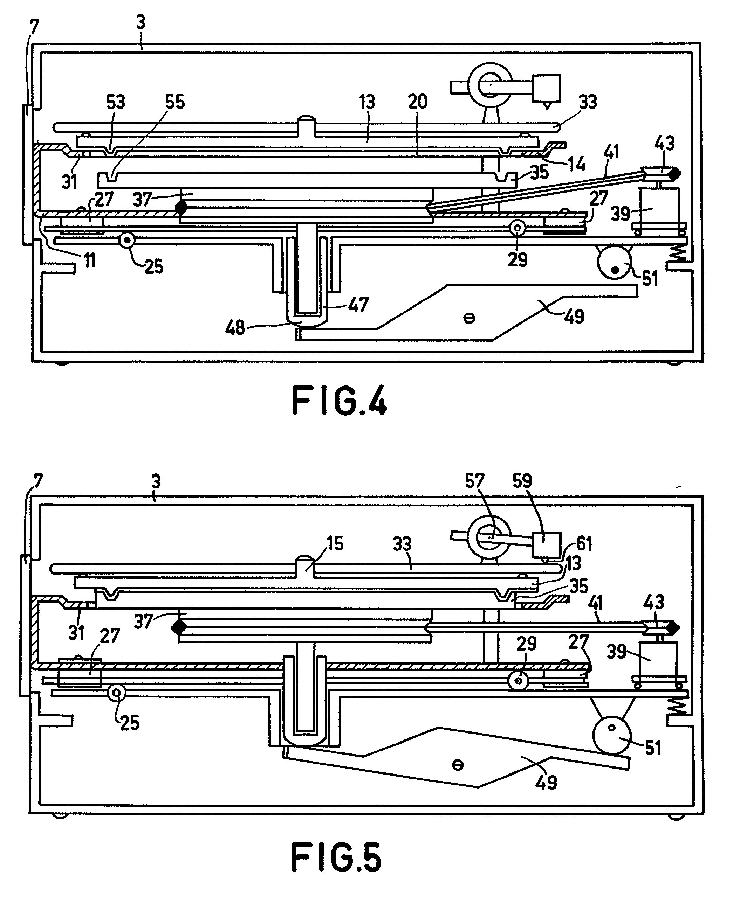

In der Darstellung nach Fig. 4 ist der Schlitten 11 mit der von ihm getragenen Ablage 14 in das Gehäuse 3 eingefahren. Der Plattenteller 13 befindet sich damit oberhalb der Mitnahmevorrichtung bzw. des Antriebstellers 35 in einer abgesenkten Stellung. In dieser abgesenkten Stellung findet kein Abspielvorgang statt. Der Antriebsteller 35 befindet sich noch tiefer in seiner Ausgangsstellung. Der Exzenter 51 hebt den Antriebsteller 35 über den doppelarmigen Hebel 49 und die Buchse 47 an (Fig. 5) in die abgesenkte Stellung, in der der Antriebsteller 35 von unten gegen den Plattenteller 13 stösst. Der Antriebsteller 35 fährt weiter aufwärts, hebt den Plattenteller 13 mit der Platte 33 von dem Rand 31 der Ablage 14 ab und bringt ihn in die Betriebsstellung. Die Seilrolle 37 und die Antriebsrolle 43 liegen in der Betriebsstellung auf gleicher Höhe, so dass der Seiltrieb 41 nicht mehr höhenverspannt ist.

In der abgesenkten Stellung haben sich der Antriebsteller 35 und der Plattenteller 13 drehschlüssig und formschlüssig miteinander verbunden über eine Drehsicherung. Diese Drehsicherung besteht aus Ansätzen 53 an der Unterseite des Plattentellers 13 und Aussparungen 55 an der Oberseite des Antriebstellers 35, die ineinander eingreifen.

Das Abspielgerät ist damit abspielbereit, und der Stellmechanismus zum Abspielen kann in Gang gesetzt werden. Das bedeutet, der Laufwerksmotor 39 treibt nun über den Seiltrieb 41 und den Antriebsteller 35 den Plattenteller 13 an. Der am Tonarm 57 gehaltene Tonkopf 59 setzt sich danach mit seiner Nadel 61 auf die Platte zum Zwecke des Abspielens auf. Ist der Abspielvorgang abgeschlossen, dann hebt der Tonarm automatisch an, wird zurückgeführt, und der Exzenter senkt den Antriebsteller 35 mit Plattenteller 13 so weit ab, bis der Plattenteller 13 sich in der abgesenkten Stellung ablöst und wieder auf der Ablage 14 absetzt. Der Antriebsteller fährt weiter nach unten bis in seine Ausgangsstellung. Der Schlitten 11 fährt aus und bietet die Platte ausserhalb des Gehäuses 3 zum Wechseln an.

An der Unterseite der Ablage 14 sind zwei Signalschalter 63 angeordnet, aus denen Schaltstifte 65 durch die Ablage 14 hindurch nach oben greifen. Die Schaltstifte 65 stehen so weit über die Oberseite der Ablage 14 vor, dass sie von einer aufgelegten Schallplatte niederdrückbar sind. Über eine Verbindungsleitung 67 können von den Signalschaltern 63 Steuersignale an ein Schaltwerk 69 weitergegeben werden, zu dem eine logische Schaltung 70 gehört. Die in dem Schaltwerk verarbeiteten Signale sorgen dann dafür, dass ein schematisch dargestellter Motor 71 nach Massgabe der Schaltstifte 65 die Bewegung der Ablage 14, d.h. Ein- und Ausfahren, vornimmt. Die Signalschalter 63 sind nur wirksam, wenn die Ablage 14 in die ausgefahrene Stellung herausgefahren ist. In eingefahrener Stellung sind die Signalschalter vom Schaltwerk 69 getrennt, damit beim Absenken des Plattentellers 13 kein Signal erzeugt wird.

Die automatische Steuerung über das Schaltwerk 69 geschieht folgendermassen: Ist der Schlitten 11 mit der Ablage 14 nach Beendigung eines Abspielvorganges ausgefahren, dann bleibt er ausgefahren bis die Platte von der Ablage abgenommen ist. Wird die Platte nicht abgenommen, dann bleibt die Ablage unbegrenzt ausserhalb des Gerätes stehen. Wird die Platte abgenommen, dann fährt der Schlitten nach Ablauf von beispielsweise 25 s wieder ein, wenn keine neue Platte aufgelegt worden ist. Wurde jedoch im Rahmen eines Plattenwechsels eine neue Platte aufgelegt, dann fährt der Schlitten 5 s nach dem Auflegen ein, und ein neuer Abspielvorgang beginnt.

## Patentansprüche

1. Abspielgerät für mit Informationen versehene Platte und mit:

— einem Gehäuse mit einer an einer Gehäusevorderseite vorgesehenen Einfuhröffnung für solche Platten,
— einem in dem Gehäuse angeordneten Laufwerk zum drehenden Antreiben der Platten um eine Drehachse,
— einer Verfahr- und Hebevorrichtung für das horizontale Verfahren und gleichzeitige vertikale In-Verbindung-Bringen des Plattentellers aus einer wenigstens teilweise aus dem Gehäuse ausgefahrenen Stellung (Ladestellung für die Platte) in die Betriebsstellung, in welcher der Plattenteller ganz in das Gehäuse eingefahren und in Verbindung gebracht ist mit dem im Gehäuse angeordneten Laufwerk zum drehenden Antreiben des Plattentellers um eine Drehachse,

dadurch gekennzeichnet, dass

— das horizontale Verfahren des Plattentellers in eine Zwischenstellung nur mit Hilfe der Verfahrvorrichtung und das anschliessende vertikale Anheben des Plattentellers aus der Zwischenstellung in die Betriebsstellung nur mit Hilfe der Hebevorrichtung erfolgt, wobei beide Vorrichtungen unabhängig und zeitlich nacheinander betätigt werden, und
— eine Ablage vorgesehen ist, welche den Plattenteller beim horizontalen Verfahren unterstützt, und aus welcher der Plattenteller mit Hilfe der Hebevorrichtung abhebbar ist.

2. Abspielgerät nach Anspruch 1, dadurch gekennzeichnet, dass

— das Laufwerk eine um die Drehachse drehbare Mitnahmevorrichtung umfasst,

— die Mitnahmevorrichtung von der Hebevorrichtung axial verschiebbar ist von einer unterhalb der abgesenkten Stellung des Plattentellers befindlichen Ausgangsstellung über eine Zwischenstellung, in der die Mitnahmevorrichtung mit dem Plattenteller in einen Wirkeingriff zur Mitnahme des Plattentellers gebracht wird, in eine mit der Betriebsstellung des Plattentellers übereinstimmende Antriebsstellung und zurück.

3. Abspielgerät nach Anspruch 2, dadurch gekennzeichnet, dass die Mitnahmevorrichtung aus einem Antriebsteller besteht.

4. Abspielgerät nach Anspruch 3, dadurch gekennzeichnet, dass der Antriebsteller und der Plattenteller mit miteinnander zusammenwirkenden Zentriergliedern versehen sind, die bei vorhandenem Wirkeingriff den Platenteller gegenüber der Drehachse zentrieren.

5. Abspielgerät nach Anspruch 1, dadurch gekennzeichnet, dass die Verfahrvorrichtung aus einem Schlitten besteht, an dem die Ablage angeordnet ist, und worauf der Plattenteller bei abgesenkter Stellung der Mitnahmevorrichtung lose aufliegt.

6. Abspielgerät nach Anspruch 5, dadurch gekennzeichnet, dass der Schlitten aus mehreren gegeneinander verschiebbaren Teilschlitten aufgebaut ist.

7. Abspielgerät nach Anspruch 2, dadurch gekennzeichnet, dass

— der Plattenteller mit einem Zentrierstift für aufzulegende Platten versehen ist,

— eine Welle zum Tragen der Mitnahmevorrichtung vorgesehen ist,

— die Welle in einer Lagerbuchse mit einem geschlossenen Buchsenboden gelagert ist, auf dem sich die Welle axial abstützt,

— die Lagerbuchse mittels der Hebevorrichtung axial verschiebbar ist für das Bewegen der Mitnahmevorrichtung zwischen der Ausgangsstellung und der Betriebsstellung,

— eine Verdrehsicherung vorgesehen ist, die die Lagerbuchse gegen ein Verdrehen gegenüber dem Gehäuse sichert.

8. Abspielgerät nach Anspruch 1, dadurch gekennzeichnet, dass

— in der Ablage wenigstens ein Signalschalter vorgesehen ist,

— der Signalschalter an ein Schaltwerk signalisiert, ob auf dem Plattenteller eine Platte aufliegt oder nicht.

9. Abspielgerät nach Anspruch 8, dadurch gekennzeichnet, dass das Schaltwerk mit einer logischen Schaltung in Verbindung steht, die den Schlitten mit der Ablage ausgefahren stehen lässt, wenn die Platte nicht abgenommen wird, und die dafür sorgt, dass der Schlitten selbsttätig einfährt, und zwar nach 25 s, wenn die Platte abgenommen wurde, oder nach 5 s, wenn die Platte ausgewechselt wurde.

**Claims**

1. A reproducing apparatus for records provided with information, which apparatus comprises:
— a housing with an opening for the insertion of such records, which opening is situated at the housing front,
— a drive mechanism for the rotary drive of the records about an axis of rotation, which mechanism is accommodated in the housing, and
— a positioning and lifting device for horizontally positioning the turntable and, at the same time, vertically coupling the turntable from a position in which it extends at least partly from the housing (disc-loading position) into the operating position, in which the turntable is located completely inside the housing and is coupled to the drive mechanism in the housing for the rotary drive of the turntable about an axis of rotation,
characterized in that
— the horizontal positioning of the turntable into an intermediate position is effected only by means of the positioning device and the subsequent vertical lifting of the turntable from the intermediate position into the operating position is effected only by means of the lifting device, the two devices being actuated independently of each other and one after the other, and
— there is provided a support which supports the turntable during the horizontal movement and from which the turntable can be lifted by means of the lifting device.

2. A reproducing apparatus as claimed in claim 1, characterized in that
— the drive mechanism comprises a coupling device which is rotatable about the axis of rotation,
— the coupling device is axially movable by the lifting device from an initial position, which is situated below the lowered position of the turntable, via an intermediate position, in which the coupling device is made to engage with the turntable in order to position the turntable into a drive position, which corresponds to the operating position of the turntable, and back.

3. A reproducing apparatus as claimed in claim 2, characterized in that the coupling device comprises a drive platen.

4. A reproducing apparatus as claimed in claim 3, characterized in that the drive platen and the turntable are provided with cooperating centering members which, once coupling is established, centre the turntable relative to the axis of rotation.

5. A reproducing apparatus as claimed in claim 1, characterized in that the positioning device comprises a slide on which the support is arranged and which loosely carries the turntable in the lowered position of the coupling device.

6. A reproducing apparatus as claimed in claim 5, characterized in that the slide comprises a plurality of slide sections which are movable relative to each other.

7. A reproducing apparatus as claimed in claim 2, characterized in that
— the turntable is provided with a centring pin for records to be put on,
— a shaft is provided for carrying the coupling device,
— the shaft is journalled in a bearing bush having a closed bottom which axially supports the shaft,
— the bearing bush is axially movable by means of the lifting device for moving the coupling device between the initial position and the operating position, and
— a latching device is provided which prevents the bearing bush from being rotated relative to the housing.

8. A reproducing apparatus as claimed in claim 1, characterized in that
— the support is provided with at least one signal switch, and
— the signal switch provides a signal to a switching mechanism to indicate whether or not a record is present on the turntable.

9. A reproducing apparatus as claimed in claim 8, characterized in that the switching mechanism is connected to a logic circuit which causes the slide with the support to remain extended when the record is not removed and which causes the slide to be automatically retracted, namely after 25 s when the record has been removed or after 5 s when the record is changed.

**Revendications**

1. Appareil de reproduction d'information enregistrée sur disque comprenant:
— un boîtier présentant une ouverture d'introduction pour de tels disques prévue dans la paroi antérieure du boîtier,
— un mécanisme d'entraînement monté dans le boîtier pour entraîner les disques en rotation autour d'un axe de rotation,
— un dispositif de déplacement et de soulèvement destiné à déplacer le plateau à disque horizontalement et simultanément à l'amener verticalement en liaison à partir d'une position sortie partiellement du boîtier (position de chargement pour le disque) dans la position de fonctionnement, dans laquelle le plateau à disque est introduit complètement dans le boîtier et est amené en liaison avec le mécanisme d'entraînement monté dans le boîtier qui entraîne le plateau à disque en rotation autour d'un axe de rotation, caractérisé en ce que:
— le déplacement horizontal du plateau à disque dans une position intermédiaire s'effectue uniquement à l'aide du dispositif de déplacement et le soulèvement vertical ultérieur du plateau à disque à partir de la position intermédiaire dans la position de fonctionnement ne s'effectue qu'à l'aide du dispositif de soulèvement, les deux dispositifs étant actionnés indépendamment l'un de l'autre et successivement, et
— un élément de réception est prévu qui soutient le plateau à disque lors du déplacement horizontal et à partir duquel le plateau à disque peut être soulevé à l'aide du dispositif de soulèvement.

2. Appareil de reproduction suivant la revendication 1, caractérisé en ce que:
— le mécanisme d'entraînement comporte un dispositif entraîneur pouvant tourner autour de l'axe de rotation,
— le dispositif entraîneur peut être déplacé axialement par le dispositif de soulèvement à partir d'une position de départ située en dessous de la position abaissée du plateau à disque, en passant par une position intermédiaire dans laquelle il est amené en prise avec le plateau à disque en vue de l'entraîner, dans une position d'entraînement coïncidant avec la position de fonctionnement du plateau à disque et inversement.

3. Appareil de reproduction suivant la revendication 2, caractérisé en ce que le dispositif entraîneur est formé d'un plateau d'entraînement.

4. Appareil de reproduction suivant la revendication 3, caractérisé en ce que le plateau d'entraînement et le plateau à disque sont pourvus d'organes de centrage coopérant l'un avec l'autre qui, lorsqu'ils sont en prise, centrent le plateau à disque par rapport à l'axe de rotation.

5. Appareil de reproduction suivant la revendication 1, caractérisé en ce que le dispositif de déplacement est formé d'un chariot sur lequel l'élément de réception est monté, le plateau à disque étant posé sans serrage sur l'élément de réception lorsque le dispositif entraîneur est en position abaissée.

6. Appareil de reproduction suivant la revendication 5, caractérisé en ce que le chariot est formé de plusieurs chariots partiels pouvant coulisser l'un par rapport à l'autre.

7. Appareil de reproduction suivant la revendication 2, caractérisé en ce que:
— le plateau à disque est pourvu d'un ergot de centrage pour des disques à poser,
— d'un arbre pour supporter le dispositif entraîneur,
— l'arbre pivote à rotation dans une douille de palier à fond fermé, sur lequel l'arbre prend appui axialement,
— la douille de palier peut être déplacée axialement au moyen du dispositif de soulèvement en vue du déplacement du dispositif entraîneur entre la position de départ et la position de fonctionnement,
— une sécurité antitorsion est prévue et empêche la douille de palier de tourner par rapport au boîtier.

8. Appareil de reproduction suivant la revendication 1, caractérisé en ce que:
— au moins un interrupteur de signalisation est prévu dans l'élément de réception,
— les interrupteurs de signalisation signalent à un dispositif de commutation si un disque est posé sur le plateau à disque ou non.

9. Appareil de reproduction suivant la revendication 8, caractérisé en ce que le dispositif de commutation est connecté à un circuit logique qui maintient le chariot avec l'élément de réception sorti lorsque le disque n'est pas enlevé et qui assure que le chariot rentre automatiquement, et ce après 25 s, au cas où le disque a été enlevé, ou après 5 s, au cas où le disque a été remplacé.

FIG.1

FIG.2

FIG.3

0 040 880

FIG.4

FIG.5

**FIG.6**

**FIG.7**